# EUROPÄISCHE PATENTSCHRIFT

(11) **EP 1 324 903 B1**
(45) Veröffentlichungstag und Bekanntmachung des Hinweises auf die Patenterteilung: **14.07.2004**
(21) Anmeldenummer: 01986651.6
(22) Anmeldetag: 09.10.2001
(51) Int. Cl.: B60T 7/04, B60T 13/66

(54) **VERFAHREN UND BREMSANLAGE ZUR EINSTELLUNG DER BREMSKRAFT IN EINEM KRAFTFAHRZEUG**
METHOD AND BRAKE SYSTEM FOR ADJUSTING THE BRAKING FORCE IN A VEHICLE
PROCEDE ET SYSTEME DE FREINAGE POUR LE REGLAGE DE LA FORCE DE FREINAGE D'UN VEHICULE

(30) Priorität: 12.10.2000 DE 10050466
(43) Veröffentlichungstag der Anmeldung: 09.07.2003
(73) Patentinhaber: DaimlerChrysler AG, 70567 Stuttgart (DE)
(72) Erfinder: FRENTZ, Georg, 72622 Nürtingen (DE); KANDEMIR, Taner, 70599 Stuttgart (DE); KÖRBER, Ralf, 70188 Stuttgart (DE); LEBER, Matthias, 70599 Stuttgart (DE); PRADT, Arthur, 71083 Herrenberg (DE); RIEDEL, Hans-Georg, 75177 Pforzheim (DE); SCHWARZ, Roland, 72116 Mössingen (DE); STOLL, Ulrich, 71034 Böblingen (DE)
(86) Internationale Anmeldenummer: PCT/EP2001/011655
(87) Internationale Veröffentlichungsnummer: WO 2002/030723

(56) Entgegenhaltungen:
- EP-A- 0 581 289
- DE-A- 4 430 461

## Beschreibung

Die Erfindung betrifft ein Verfahren und eine Bremsanlage zur veränderlichen Einstellung der Bremskraft in einem Kraftfahrzeug nach dem Oberbegriff des Anspruches 1 bzw. 10.

Aus der EP 0581 289 A1 ist ein derartiges Verfahren und eine derartige Vorrichtung bekannt. Die Funktion zwischen der Pedalbetätigung und dem Bremsdruck kann dort vom Fahrer mittels eines Schiebeeinstellknopfes verändert werden. Hierzu kann der Fahrer den einer bestimmten Pedalbetätigung zugeordneten Bremsdruck variieren. Die gesamte Funktion setzt sich dabei aus zwei Geraden zusammen, wobei die erste Gerade im Nullpunkt beginnt und an dem variablen Punkt endet und die zweite Gerade am variablen Punkt beginnt und im Punkt der maximalen Pedalbetätigung und des maximalen Bremsdrucks endet.

Des Weiteren offenbart die DE 44 30 461 A1 ein Verfahren zur Steuerung des Bremsdrucks in Abhängigkeit von der Bremspedalgeschwindigkeit. Dabei wird der maximale Bremsdruck erzeugt, wenn die Betätigungsgeschwindigkeit einen vorgegebenen Schwellenwert übersteigt. Dieser Schwellenwert wird abhängig von bei Teilbremsungen gemessenen Werten der Fahrzeugverzögerung, des Bremsdrucks uns des Pedalwegs mittels einem Änpassungsfaktor an den tatsächlichen Zustand der Bremsanlage angepasst. Die Pedalcharakteristik bleibt unverändert.

Ferner.geht aus der Druckschrift DE 35 26 556 A1 eine hydraulische Bremsanlage für Kraftfahrzeuge hervor, bei der die Pedalbetätigung sensorisch ermittelt und über eine vorgegebene Beziehung in einen korrespondierenden Bremsdruck umgesetzt wird. Hierzu ist eine Messeinrichtung am Bremspedal vorgesehen, mit der entweder der Pedalweg oder die Pedalkraft gemessen wird. Das erzeugte Messsignal wird einer Steuereinrichtung zugeführt, in der gemäß einer hinterlegten Kennlinie aus der Größe des Messsignals auf eine gewünschte Fahrzeugverzögerung bzw. einen gewünschten Bremsdruck geschlossen wird, welcher durch entsprechende Ansteuerung der Radbremseinrichtung generiert wird.

Bei derartigen, auch unter dem Begriff elektro-hydraulische Bremsen bekannten Bremsanlagen kann es auf Grund von produktionsbedingten Bauteiltoleranzen zu Abweichungen von einer vorgegebenen Sollkurve im Bremsverhalten kommen. Derartige Abweichungen müssen durch nachträgliche Kalibrierungen und Anpassungen im Druckverlauf ausgeglichen werden.

Weitere Probleme können dadurch entstehen, dass durch Wärme, Nässe, Bauteilverschleiß oder sonstige Bedingungen das Bremsverhalten beeinflusst wird, wodurch Gefahrensituationen entstehen können.

Schließlich wird das Bremsverhalten auch durch das sich individuell von Fahrer zu Fahrer unterscheidende Bremsverhalten beeinflusst, da verschiedene Fahrer in vergleichbaren Situationen das Bremspedal unterschiedlich stark betätigen.

Bei dem gattungsbildenden Verfahren bzw. der gattungsbildenden Vorrichtung ist es von Nachteil, dass Fahrzeug untypische Pedalcharakteristiken - wie beispielsweise lange Pedalleerwege - einstellbar sind, wodurch sich eventuell Sicherheitsrisiken ergeben.

Der Erfindung liegt das Problem zu Grunde, die Fahrsicherheit in Fahrzeugen durch eine verbesserte Veränderung der Funktion zwischen Pedalbetätigung und der Fahrzeugverzögerung bzw. dem Bremsdruck oder einer mit dem Bremsdruck korrelierten Größe zu erhöhen.

Dieses Problem wird erfindungsgemäß bei einem Verfahren mit den Merkmalen des Anspruches 1 und bei einer Bremsanlage mit den Merkmalen des Anspruches 10 gelöst.

Gemäß dem Verfahren wird der Bremsdruck bzw. die mit dem Bremsdruck korrelierende Größe - insbesondere die Fahrzeugverzögerung, die aus einem bekannten, vorgegebenen Zusammenhang unmittelbar aus dem Bremsdruck errechnet werden kann - fahrzeugindividuell und/oder fahrerindividuell innerhalb zulässiger Grenzen als Funktion der Pedalbetätigung variiert. Hierdurch ist es möglich, Streuungen, die beispielsweise auf Bauteiltoleranzen der Bremsanlage zurückzuführen sind, selbsttätig und/oder durch Eingriffe von außen, beispielsweise bei Serviceintervallen, zu kompensieren und beispielsweise an eine vorgegebene Sollkurve, die für einen bestimmten Bremsanlagentypus repräsentativ ist, anzugleichen. Es kann hierdurch insbesondere sichergestellt werden, dass ein bestimmter Bremsanlagentypus in unterschiedlichen Fahrzeugen trotz nicht zu vermeidender Bauteiltoleranzen bei gleicher Bremspedalbetätigung den gleichen Bremsdruck bzw. die gleiche Bremsverzögerung erzeugt.

Ein weiterer Vorteil ist darin zu sehen, dass es möglich ist, während des laufenden Betrieb des Fahrzeuges, insbesondere auch während eines laufenden Bremsvorganges, den Bremsdruck anzupassen, wodurch insbesondere ein Nachlassen der Bremse (Fading) kompensiert werden kann. Gegebenenfalls werden hierbei aber zusätzliche Bedingungen berücksichtigt, beispielsweise die Temperatur der Bremsscheiben bzw. sonstiger, unmittelbar zur Bremsung benötigter Bremskomponenten, um eine Überhitzung zu vermeiden.

Die individuelle Anpassung ermöglicht schließlich eine fahrerspezifische Änderung der Bremsdruckkennlinie, so dass auch Fahrer individuellen Wünschen Rechnung getragen werden kann, indem der Bremswunsch stärker oder schwächer sensiert wird.

Um zu vermeiden, dass durch eine fahrzeugindividuelle und/oder fahrerindividuelle Veränderung der Bremsdruckkennlinie unzulässig große Unterschiede zwischen zwei vergleichbaren Bremsanlagen auftreten, ist eine Anpassung der Bremsdruckkennlinie nur innerhalb zulässiger, vorzugebender Grenzen möglich.

Die Grenzen, innerhalb derer eine Manipulation erlaubt ist, sind variabel in Abhängigkeit von der aktuellen Pedalbetätigung und/oder in Abhängigkeit sonstiger Fahrzeugzustandsgrößen und - betriebsgrößen vorgegeben. So kann es beispielsweise zweckmäßig sein, in einem niederen Dosierbereich, beginnend ab der Pedalausgangsstellung, weiter gefasste Grenzen zu definieren, innerhalb der eine Manipulation erlaubt ist, und mit fortschreitender Pedalbetätigung in Richtung maximaler Pedalstellung die Grenzen zunehmend enger zu fassen. Insbesondere im Bereich der maximalen Pedalauslenkung kann es vorteilhaft sein, nur eine Verstärkung des Bremsdrucks zuzulassen, jedoch keine Schwächung.

Die Vorgabe dieser Grenzen, die sowohl als ein zu definierendes Band unterhalb und oberhalb eines Soll-Bremsdruckverlaufs in Abhängigkeit der Pedalbetätigung als auch durch einen vorzugebenden Anfangs- und/oder Endpunkt im Bremsdruckverlauf ausgeführt sein kann, stellt sicher, dass Fehler in der Bremsanlage, die nicht mehr zu tolerieren sind, erkannt werden können. Durch Überwachung des Bremsdrucks kann ein Fehler oder eine Störung für den Fall detektiert werden, dass der Bremsdruck außerhalb der zulässigen Grenzen liegt. Ein derartiger Störfall wird dem Fahrer zweckmäßig angezeigt; zugleich kann der Bremsdruck zumindest bis an den nächstliegenden Bremswert angeglichen werden, um zumindest die noch maximal mögliche Bremskraft auszuschöpfen.

Als Pedalbetätigung kann sowohl der Pedalweg als auch die Pedalkraft gemessen und der Bestimmung des Bremsdrucks zu Grunde gelegt werden. In einer geregelten Ausführung wird der Ist-Bremsdruck gemessen und an den rechnerisch bestimmten Soll-Bremsdruck, welcher als Funktion in Abhängigkeit der Pedalbetätigung bestimmt wird, angeglichen. In einer gesteuerten Ausführung kann es aber ausreichend sein, den Bremsdruck ohne Messung des Ist-Bremsdrucks gemäß eines vorgegebenen Zusammenhangs einzustellen.

Der Bremsdruck wird nicht über den gesamten Wertebereich der Pedalbetätigung manipuliert, sondern lediglich zwischen einer ersten Pedalposition und einer zweiten Pedalposition, wobei über die beiden Pedalpositionen ein Teilbereich aus der gesamten, dem Fahrer zur Verfügung stehenden Pedalbetätigung definiert wird. Dieser Teilbereich bzw. Abschnitt beginnt zweckmäßig bei der Pedal-Ausgangsstellung und endet in einem mittleren Pedal-Betätigungsbereich, der zwischen der Ausgangsstellung und der maximal möglichen Betätigungsstellung liegt. Vorteilhaft wird lediglich in diesem Anfangsabschnitt der Bremsdruck manipuliert, nicht aber im Abschnitt bis zur maximalen Pedalbetätigung, bei der der maximale Bremsdruck bzw. die maximale Bremsverzögerung wirksam wird. Es soll dadurch sicher gestellt werden, dass in dem besonders sicherheitsrelevanten Bremsbereich bis zur maximalen Bremsverzögerung, welcher in der Regel nur in Notsituationen ausgeschöpft wird, keine durch den Fahrer erzeugte Schwächung der Bremskraft auftreten kann.

In einer alternativen Ausführung kann es aber auch zweckmäßig sein, den manipulierbaren Bereich auf den gesamten Pedalbetätigungsbereich zu erstrecken.

Weiter Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer elektrohydraulischen Bremsanlage für ein Kraftfahrzeug, die über eine Steuerungseinrichtung zur Manipulation des Bremsdrucks verfügt,
- Fig. 2: ein Schaubild mit dem Verlauf der Pedalkraft in Abhängigkeit der Pedalbetätigung des Bremspedals,
- Fig. 3: ein Schaubild mit einem zulässigen Verstellbereich für den Bremsdruck in Abhängigkeit von der Pedalkraft,
- Fig. 4: ein Schaubild mit einem modifizierten Verlauf eines Bremsdrucks in Abhängigkeit von der Pedalkraft.

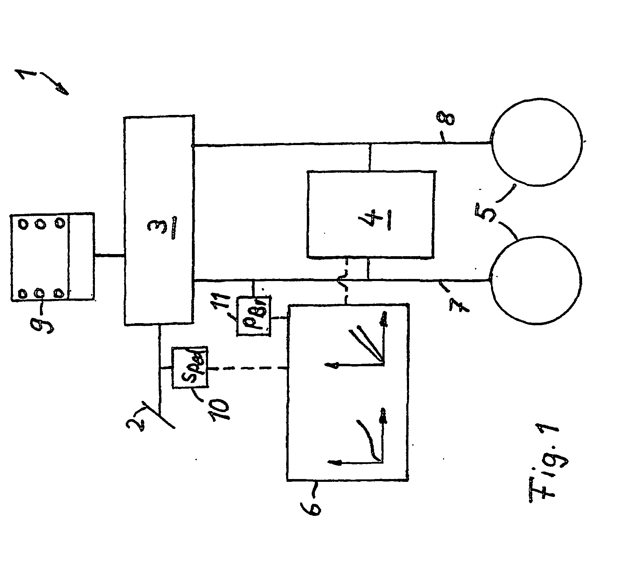

Die in Fig. 1 gezeigte Bremsanlage 1 ist als elektro-hydraulische Bremse ausgebildet und umfasst ein Bremspedal 2, welches mit einem Bremsdruckgeber 3 in Verbindung steht, der über Hydraulikleitungen 7 und 8 mit einer Radbremseinrichtung 5 verbunden ist. Weiterhin ist eine mit den Hydraulikleitungen 7 und 8 verbundene Hydraulikeinheit 4 zur Generierung eines gewünschten Bremsdruckes p_{Br} vorgesehen. Der Pedalweg des Bremspedals 2 wird über einen Wegsensor 10 gemessen, der Hydraulikdruck p_{Br} in den Hydraulikleitungen 7 bzw. 8 wird über einen Drucksensor 11 ermittelt. Weiterhin ist eine Steuerungseinrichtung 6 vorgesehen, welche Messsignale der Sensoren 10 und 11 empfängt und in Abhängigkeit der Messsignale Steuerungssignale erzeugt, die der Hydraulikeinheit 4 zur Einstellung des gewünschten Bremsdruckes p_{Br} zugeführt werden.

Dem Bremsdruckgeber 3 ist ein Pedalwegsimulator 9 zugeordnet, über den ein elastisch-nachgiebiges Pedalverhalten des Bremspedales 2 erzeugbar ist.

Bei einer Betätigung des Bremspedales 2 durch den Fahrer wird der Bremsdruckgeber 3, welcher insbesondere als hydraulischer Tandemzylinder ausgebildet ist, vom Bremspedal 2 beaufschlagt, wobei in Störfällen - bei defekter Bremsanlage - über die Hydraulikleitungen 7 und 8 zwischen dem Bremsdruckgeber 3 und der Radbremseinrichtung 5 eine unmittelbare Druckübertragung auf die Radbremseinrichtung 5 möglich ist.

Bei funktionstüchtiger Bremsanlage 1 wird der Pedalweg s_{ped} des Bremspedals 2 über den Wegsensor 10 gemessen und als Messsignal an die Steuerungseinrichtung 6 übertragen. In der Steuerungseinrichtung 6 wird in Abhängigkeit des gemessenen Pedalwegs s_{ped} ein dem aktuellen Wert des Pedalwegs zugeordneter Bremsdruck p_{Br,soll} bzw. eine mit dem Bremsdruck korrelierende Größe, insbesondere die Fahrzeugverzögerung, ermittelt. Der Bremsdruck bzw. die mit dem Bremsdruck korrelierende Größe wird als Sollgröße an die Hydraulikeinheit 4 übertragen, in der eine entsprechende Druckeinstellung und Übertragung auf die Radbremseinrichtung 5 über die Hydraulikleitungen 7 und 8 durchgeführt wird.

Die Einstellung des tatsächlichen Bremsdruckes p_{Br} kann sowohl geregelt als auch ungeregelt erfolgen. Im geregelten Fall wird über den Drucksensor 11 der tatsächliche Bremsdruck p_{Br} in den Hydraulikleitungen 7 und 8 gemessen und als Messsignal an die Steuerungseinrichtung 6 übertragen, in der die Hydraulikeinheit 4 beaufschlagende Steuersignale in der Weise erzeugt werden, dass der gemessene Bremsdruck p_{Br} an den Solldruckverlauf p_{Br,soll} angeglichen wird. Im ungeregelten Fall kann dagegen auf eine Messung des tatsächlichen Bremsdruckes p_{Br} über den Drucksensor 11 verzichtet werden; es erfolgt eine ausschließlich gesteuerte Einstellung des tatsächlichen Bremsdruckes auf den ermittelten Sollverlauf.

Es kann gegebenenfalls zweckmäßig sein, anstelle des Pedalwegs s_{Ped} die vom Fahrer ausgeübte Pedalkraft auf das Bremspedal 2 zu messen und den gewünschten Bremsdruck p_{Br} in Abhängigkeit der gemessenen Pedalkraft zu ermitteln.

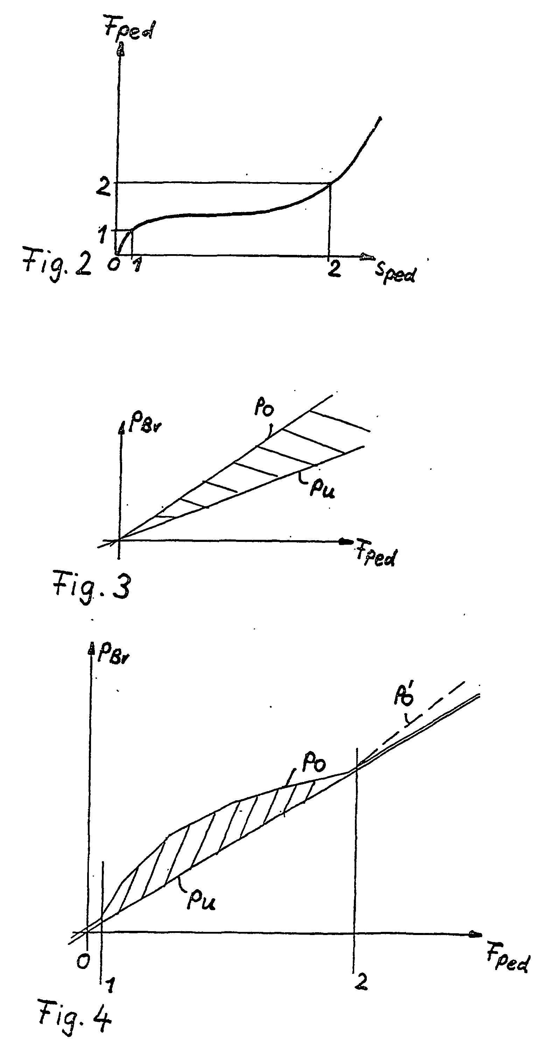

Im Falle eines gemessenen Pedalwegs s_{Ped} kann gemäß dem in Fig. 2 gezeigten Zusammenhang aus dem Pedalweg s_{Ped} eine zugeordnete Pedalkraft F_{Ped} ermittelt werden. Das Bremspedal ist zweckmäßig in der Weise ausgebildet, dass die Pedalkraft F_{Ped} über dem Pedalweg s_{Ped} einen stark nichtlinearen Verlauf einnimmt, wobei in einem ersten Abschnitt zwischen der unbetätigten Pedal-Ausgangsstellung (Stellung 0) bis zu einer ersten Stellung 1, die dicht auf die Ausgangsstellung folgt, ein starker Anstieg zu verzeichnen ist, zwischen der ersten Stellung 1 und einer zweiten Stellung 2 nur ein geringer Anstieg stattfindet und ab der Stellung 2 bis zur Maximalstellung des Bremspedals wieder ein stärkerer Anstieg gegeben ist.

Die Bremsanlage ist in der Weise ausgeführt, dass der auf die Radbremseinrichtung wirkende Bremsdruck p_{Br} innerhalb vorgegebener Grenzen bei gegebener Pedalstellung variiert werden kann. Diese Variation kann entweder selbsttätig über die Steuerungseinrichtung durchgeführt werden, beispielsweise um Bremseinrichtungen, die in ihrem Bremsverhalten zu stark von einem gegebenen Mittelwert abweichen, auf diesen Mittelwert zu kalibrieren, oder um fahrerindividuelle Einstellungen zu ermöglichen, wobei dem Fahrer die Möglichkeit eingeräumt wird, den Bremswunsch stärker oder schwächer zu sensieren, um ein härteres oder weicheres Bremsverhalten einzustellen.

Ein derartiger Manipulationsbereich für den Bremsdruck p_{Br} ist in den Figuren 3 und 4 in Abhängigkeit der Pedalkraft F_{Ped} dargestellt. In dem Schaubild nach Fig. 3 wird eine obere und eine untere Grenze pₒ bzw. pᵤ vorgegeben, die einen zulässigen Manipulationsbereich für den Bremsdruck p_{Br} markieren, innerhalb dem selbsttätige oder manuell einzustellende Veränderungen des Bremsdrucks zulässig sind. Die obere Grenze pₒ und die untere Grenze pᵤ sind vorteilhaft jeweils als Ursprungsgeraden ausgebildet und definieren einen mit zunehmender Pedalkraft F_{Ped} sich auffächernden Bremsdruckbereich.

In Fig. 4 ist ein nichtlinearer Verlauf einer Bremsdruck-Obergrenze pₒ eingezeichnet. Der zulässige Manipulationsbereich, innerhalb dem Variationen des Bremsdruckes p_{Br} erlaubt sind, liegt zwischen den Pedalstellungen 1 und 2, die gemäß Fig. 2 wegabhängig vorgegeben werden können und in Fig. 4 in entsprechende Kraftstellungen übertragen worden sind. Die Obergrenze pₒ des Bremsdruckes nimmt in diesem zugelassenen Manipulationsbereich einen nichtlinearen Verlauf ein. Die Obergrenze pₒ steigt zunächst ab der Stellung 1 progressiv an und fällt anschließend zur Stellung 2 hin degressiv ab. Die Untergrenze pᵤ ist im Ausführungsbeispiel eine Ursprungsgerade. Zwischen der Pedal-Ausgangsstellung 0 und der ersten Stellung 1 sowie oberhalb der zweiten Stellung 2 fallen Obergrenze pₒ und Untergrenze pᵤ zusammen, so dass in diesen Bereichen eine Variation des Bremsdruckes p_{Br} nicht möglich ist.

Gemäß einer alternativen Ausführung kann es aber auch angezeigt sein, auch in den genannten Bereichen vor der Stellung 1 bzw. nach der Stellung 2 einen zulässigen Manipulationsbereich für den Bremsdruck zu definieren. Es kann beispielsweise zweckmäßig sein, oberhalb der Stellung 2 ein zulässiges Bremsdruckband mit paralleler Ober- und Untergrenze zu definieren oder aber, wie in Fig. 4 mit gestrichelter Linie für die Obergrenze p_{o'} dargestellt, einen sich aufspreizenden Manipulationsbereich festzulegen.

Eine fahrerindividuelle Manipulation des Bremsdruckverlaufs in Abhängigkeit des Pedalweges oder der Pedalkraft kann zweckmäßig in der Steuerungseinrichtung abgespeichert werden und für jeden Fahrer individuell aktiviert werden. Die Aktivierung kann an bestimmte Einstellungen im Fahrzeug gekoppelt werden, beispielsweise an Sitzeinstellungen.

## Patentansprüche

1. Verfahren zur veränderlichen Einstellung der Bremskraft in einer hydraulischen Bremsanlage eines Kraftfahrzeugs, wobei die vom Fahrer ausgeübte Pedalbetätigung gemessen wird und über einen vorgegebenen Zusammenhang in einen einer bestimmten Fahrzeugverzögerung entsprechenden, in einer Radbremseinrichtung (5) zu erzeugenden Bremsdruck (p_{Br}) bzw. eine mit dem Bremsdruck korrelierende Größe umgewandelt wird, wobei der Bremsdruck (p_{Br}) bzw. die mit dem Bremsdruck korrelierende Größe individuell als Funktion der Pedalbetätigung innerhalb eines Abschnitts der Pedalbetätigung zwischen Pedal-Ausgangsstellung und maximaler Pedal-Betätigungsstellung manipuliert wird,
**dadurch gekennzeichnet,**
**dass** das Manipulieren der Funktion nur innerhalb variabler Grenzen möglich ist, die von der Pedalbetätigung und/oder von anderen Fahrzeugzustandsgrößen abhängen.

2. Verfahren nach Anspruch 1,
**dadurch gekennzeichnet,**
**dass** als Pedalbetätigung der Pedalweg (s_{Ped}) herangezogen wird.

3. Verfahren nach Anspruch 1 oder 2,
**dadurch gekennzeichnet,**
**dass** als Pedalbetätigung die Pedalkraft herangezogen wird:

4. Verfahren nach einem der Ansprüche 1 bis 3,
**dadurch gekennzeichnet,**
**dass** der Bremsdruck (p_{Br}) bzw. die mit dem Bremsdruck korrelierende Größe in einem Abschnitt beginnend bei der Pedal-Ausgangsstellung manipuliert wird.

5. Verfahren nach einem der Ansprüche 1 bis 4,
**dadurch gekennzeichnet,**
**dass** der Verlauf des Bremsdrucks (p_{Br}) bzw. der mit dem Bremsdruck korrelierenden Größe als Funktion der Pedalbetätigung an eine fest vorgegebene Sollkurve angeglichen wird.

6. Verfahren nach einem der Ansprüche 1 bis 5,
**dadurch gekennzeichnet,**
**dass** der Verlauf des Bremsdrucks (p_{Br}) bzw. der mit dem Bremsdruck korrelierenden Größe selbsttätig eingestellt wird.

7. Verfahren nach einem der Ansprüche 1 bis 6,
**dadurch gekennzeichnet,**
**dass** der Verlauf des Bremsdrucks (p_{Br}) bzw. der mit dem Bremsdruck korrelierenden Größe fahrerindividuell zu beeinflussen ist.

8. Verfahren nach Anspruch 7,
**dadurch gekennzeichnet,**
**dass** der Verlauf des Bremsdrucks (p_{Br}) bzw. der mit dem Bremsdruck korrelierenden Größe für einen bestimmten Fahrer speicherbar und aktivierbar ist.

9. Verfahren nach einem der Ansprüche 1 bis 8,
**dadurch gekennzeichnet,**
**dass** der Verlauf des Bremsdrucks (p_{Br}) bzw. der mit dem Bremsdruck korrelierenden Größe proportional zu einem Mittelwert des Bremsdrucks (p_{Br}) bzw. der mit dem Bremsdruck korrelierenden Größe verändert wird.

10. Hydraulische Bremsanlage in einem Kraftfahrzeug zur veränderlichen Einstellung der Bremskraft, insbesondere Bremsanlage (1) zur Durchführung des Verfahrens nach einem der Ansprüche 1 bis 9, mit einer Messeinrichtung zur Messung der vom Fahrer ausgeübten Pedalbetätigung und mit einer Steuerungseinrichtung (6) zur Erzeugung eines Steuersignals zur Beaufschlagung einer Radbremseinrichtung (5) mit Bremsdruck (p_{Br}), wobei das Steuersignal gemäß einem vorgegebenen Zusammenhang in Abhängigkeit eines in der Messeinrichtung erzeugten Messsignals generiert wird, wobei der Zusammenhang zwischen der Pedalbetätigung und dem Bremsdruck (p_{Br}) bzw. einer mit dem Bremsdruck korrelierenden Größe durch Manipulation des Steuersignals individuell als Funktion der Pedalbetätigung innerhalb eines Abschnitts der Pedalbetätigung zwischen Pedal-Ausgangsstellung und maximaler Pedal-Betätigungsstellung zu variieren ist,
**dadurch gekennzeichnet,**
**dass** das Manipulieren der Funktion nur innerhalb variabler Grenzen möglich ist, die von der Pedalbetätigung und/oder von anderen Fahrzeugzustandsgrößen abhängen.

## Claims

1. Method for the variable adjustment of the braking force in a hydraulic braking system of a motor vehicle, such that the pedal actuation effected by the driver is measured and converted, in accordance with a predetermined relationship, into a brake pressure (p_{Br}) to be produced in a wheel braking mechanism (5) or a parameter correlated with the said braking pressure, corresponding to a given vehicle deceleration, such that the brake pressure (p_{Br}) or the parameter correlated therewith is manipulated individually as a function of the pedal actuation within a section of the pedal actuation range between the pedal's initial position and the maximum pedal actuation position,
**characterised in that**
the said function can only be manipulated within variable limits which depend on the pedal actuation and/or on other vehicle condition parameters.

2. Method according to Claim 1,
**characterised in that**
the pedal movement path (s_{Ped}) serves as the measure of the pedal actuation.

3. Method according to Claims 1 or 2,
**characterised in that**
the pedal force serves as the measure of the pedal actuation.

4. Method according to any of Claims 1 to 3,
**characterised in that**
the brake pressure (p_{Br}) or the parameter correlated therewith is manipulated in a section that begins at the initial position of the pedal.

5. Method according to any of Claims 1 to 4,
**characterised in that**
the variation of the brake pressure (p_{Br}) or the parameter correlated therewith is adapted as a function of the pedal actuation to a permanently established nominal value curve.

6. Method according to any of Claims 1 to 5,
**characterised in that**
the variation of the brake pressure (p_{Br}) or the parameter correlated therewith is adjusted automatically.

7. Method according to any of Claims 1 to 6,
**characterised in that**
the variation of the brake pressure (p_{Br}) or the parameter correlated therewith has to be individually influenced by the driver.

8. Method according to Claim 7,
**characterised in that**
**the variation of** the brake pressure (p_{Br}) or the parameter correlated therewith can be stored and activated for a given driver.

9. Method according to any of Claims 1 to 8,
**characterised in that**
the variation of the brake pressure (p_{Br}) or the parameter correlated therewith is changed proportionally to a mean value of the brake pressure (p_{Br}) or the parameter correlated therewith.

10. Hydraulic braking system in a motor vehicle for the variable adjustment of the braking force, in particular a braking system (1) for implementing the method according to any of Claims 1 to 9, with a measuring device to measure the pedal actuation effected by the driver and with a control device (6) to produce a control signal which acts upon a wheel braking mechanism (5) with a brake pressure (p_{Br}), such that the control signal is generated in accordance with a predetermined relationship as a function of a measurement signal produced by the measuring device, the relationship between the pedal actuation and the brake pressure (p_{Br}) or the parameter correlated therewith being varied by manipulation of the control signal individually as a function of the pedal actuation within a section of the pedal actuation range between the pedal's initial position and the maximum pedal actuation position,
**characterised in that**
the said function can only be manipulated within variable limits which depend on the pedal actuation and/or on other vehicle condition parameters.

## Revendications

1. Procédé pour le réglage variable de la force de freinage dans un système de freinage hydraulique d'un véhicule automobile, où l'actionnement de la pédale exercé par le conducteur est mesuré et est transformé, via une corrélation prédéfinie, en une pression de freinage (p_{Br}) et/ou en une grandeur en corrélation avec la pression de freinage, devant être générée dans un dispositif de freinage sur roue (5) et qui correspond à une décélération définie du véhicule, moyennant quoi la pression de freinage (p_{Br}) et/ou la grandeur de freinage en corrélation avec la pression de freinage, est manipulée individuellement en tant que fonction de l'actionnement de la pédale dans les limites d'une tranche de l'actionnement de la pédale entre une position de départ de la pédale et une position d'actionnement maximale de la pédale, **caractérisé en ce que** la manipulation de la fonction n'est possible que dans des limites variables, lesquelles dépendent de l'actionnement de la pédale et/ou d'autres grandeurs de l'état du véhicule.

2. Procédé selon la revendication 1, **caractérisé en ce que** l'on prenne en compte la course de pédale (S_{ped}) en guise d'actionnement de la pédale.

3. Procédé selon l'une quelconque des revendications 1 ou 2, **caractérisé en ce que** l'on prenne en compte la force de pédale en guise d'actionnement de la pédale.

4. Procédé selon l'une quelconque des revendications 1 à 3, **caractérisé en ce que** la pression de freinage (p_{Br}) et/ou la grandeur en corrélation avec la pression de freinage, est manipulée dans une tranche qui débute à la position de départ de la pédale.

5. Procédé selon l'une quelconque des revendications 1 à 4, **caractérisé en ce que** le gradient de la pression de freinage (p_{Br}) et/ou de la grandeur en corrélation avec la pression de freinage, est harmonisé avec une courbe théorique imposée en guise de fonction de l'actionnement de la pédale.

6. Procédé selon l'une quelconque des revendications 1 à 5, **caractérisé en ce que** le gradient de la pression de freinage (p_{Br}) et/ou de la grandeur en corrélation avec la pression de freinage, est réglé de manière automatique.

7. Procédé selon l'une quelconque des revendications 1 à 6, **caractérisé en ce que** le gradient de la pression de freinage (p_{Br}) et/ou de la grandeur en corrélation avec la pression de freinage, peut être influencé individuellement pour chaque conducteur.

8. Procédé selon la revendication 7, **caractérisé en ce que** le gradient de la pression de freinage (p_{Br}) et/ou de la grandeur en corrélation avec la pression de freinage, peut être mémorisé et activé pour un conducteur déterminé.

9. Procédé selon l'une quelconque des revendications 1 à 8, **caractérisé en ce que** le gradient de la pression de freinage (p_{Br}) et/ou de la grandeur en corrélation avec la pression de freinage, est modifié de manière proportionnelle à une valeur moyenne de la pression de freinage (p_{Br}) et/ou de la grandeur en corrélation avec la pression de freinage.

10. Système de freinage hydraulique dans un véhicule automobile pour le réglage variable de la force de freinage, en particulier système de freinage (1) pour l'application du procédé selon l'une quelconque des revendications 1 à 9, avec un dispositif de mesurage pour mesurer l'actionnement de la pédale exercé par le conducteur, et avec un dispositif de commande (6) pour générer un signal de commande pour alimenter un dispositif de frein sur roue (5) avec de la pression de freinage (p_{Br}), où le signal de commande est généré selon une corrélation prédéfinie en fonction d'un signal de mesure généré dans le dispositif de mesurage, moyennant quoi la corrélation entre l'actionnement de la pédale et la pression de freinage (p_{Br}) et/ou une grandeur en corrélation avec la pression de freinage, doit être variée par manipulation du signal de commande individuellement en tant que fonction de l'actionnement de la pédale dans les limites d'une tranche de l'actionnement de la pédale entre la position de départ de la pédale et la position d'actionnement maximale de la pédale, **caractérisé en ce que** la manipulation de la fonction n'est possible qu'à l'intérieur de limites variables, lesquelles dépendent de l'actionnement de la pédale et/ou d'autres grandeurs de l'état du véhicule.
